# EUROPÄISCHE PATENTSCHRIFT

(11) **EP 2 639 108 B1**
(45) Veröffentlichungstag und Bekanntmachung des Hinweises auf die Patenterteilung: **09.01.2019**
(21) Anmeldenummer: 13001014.3
(22) Anmeldetag: 28.02.2013
(51) Int. Cl.: B60Q 3/64, B60Q 3/78

(54) **Beleuchtungseinrichtung, insbesondere Konturbeleuchtung für ein Kraftfahrzeug**
Lighting device, in particular contour illumination for a motor vehicle
Dispositif d'éclairage, notamment éclairage de contour pour un véhicule automobile

(30) Priorität: 16.03.2012 DE 102012005398
(43) Veröffentlichungstag der Anmeldung: 18.09.2013
(73) Patentinhaber: AUDI AG, 85045 Ingolstadt (DE)
(72) Erfinder: Pfeil, Marcus, 90537 Feucht (DE); Tovar, Johannes, 85049 Ingolstadt (DE); Maurer, Jürgen, 85053 Ingolstadt (DE); Mohos, Richard, 85049 Ingolstadt (DE)
(74) Vertreter: Thielmann, Frank

(56) Entgegenhaltungen:
- EP-A1- 2 325 047
- DE-A1- 10 135 478
- DE-A1- 10 236 499
- DE-A1- 10 344 824
- DE-A1-102010 006 915
- DE-A1-102010 030 660
- DE-C1- 4 131 340
- FR-A1- 2 829 563
- FR-A1- 2 920 717

## Beschreibung

Die Erfindung betrifft eine Beleuchtungseinrichtung, insbesondere eine kombinierte Kontur- und Ambientebeleuchtung für ein Kraftfahrzeug, gemäß Oberbegriff des Anspruchs 1.

Beleuchtungseinrichtungen sind in unterschiedlichster Art und Form bekannt. Sie dienen einerseits zur Raumbeleuchtung, andererseits aber mitunter auch zur Kenntlichmachung oder Hervorhebung bestimmter Gegenstände oder Objekte. Derartige Beleuchtungen werden häufig Konturbeleuchtungen genannt, da sie optisch die Form oder Kontur eines hervorzuhebenden Gegenstandes betonen. Solche Konturbeleuchtungen kommen sowohl bei Geräten oder Maschinen, aber beispielsweise auch in einem Kraftfahrzeug zum Einsatz. Insbesondere dort finden sie beispielsweise Anwendung bei Lautsprechern, Tastern und Bedienfelder, Cupholdern etc. Diese Beleuchtungseinrichtungen sind letztlich Leuchtstreifen, die bestimmte Konturen hervorheben bzw. betonen sollen. Üblicherweise sind solche Konturbeleuchtungen, also Linienbeleuchtungen, mittels eines Lichtleiters realisiert, der entlang der hervorzuhebenden Kontur verläuft. Dieser Lichtleiter ist entweder direkt einsehbar, oder hinter einer davor angeordneten Streuscheibe verbaut. In den Lichtleiter wird Licht an einer Stirnseite eingekoppelt, das Licht tritt seitlich längs des Lichtleiters aus, so dass letztlich ein linienförmiger Lichtstreifen sichtbar ist.

Um die Eigenschaften eines solchen Licht leitenden Elements wie beispielsweise eines Lichtleiters nicht negativ zu beeinflussen benötigt ein solches Element eine Mindestquerschnittsfläche von ca. 7 mm², wobei eine Höhe/Breite bzw. ein Durchmesser von 2,5 mm nicht unterschritten werden darf. Bei Streuscheiben sind die begrenzenden Parameter die Herstell- und Integrierbarkeit in den Bauraum. Heutige bekannte Konturbeleuchtungen weisen aus diesem Grund eine beachtliche Breite auf, d. h., dass der helle Lichtstreifen relativ breit ist, also üblicherweise ca. 2,5 mm oder mehr. Ein derart breiter Lichtstreifen ist jedoch in manchen Fällen nicht wünschenswert, sei es aus optischen Gründen, da beispielsweise das hervorzuhebende Bauteil relativ klein ist und ein derart breiter Lichtstreifen quasi überdimensioniert wäre, sei es aus baulichen Gründen, da sich mitunter ein derart breiter Lichtstreifen nicht immer integrieren lässt.

In Druckschrift DE 10 2010 030 660 A1 wird ein beleuchtetes Innenausstattungsteil für ein Fahrzeug beschrieben. Das Innenausstattungsteil umfasst einen zweiteiligen Grundkörper mit einer Nut, in der ein Lichtleiter aufgenommen ist. Der Lichtleiter koppelt Licht in eine Oberfläche eines Lichtleiterelements ein, wobei das Licht an einer Stirnseite des Lichtleiterelements wieder ausgekoppelt wird.

In Kraftfahrzeugen kommen auch häufig Ambientebeleuchtungen zum Einsatz, die der Erzeugung einer Raumbeleuchtung dienen. Hierfür werden separate Beleuchtungseinrichtungen verbaut.

Der Erfindung liegt damit das Problem zugrunde, eine multifunktionale Beleuchtungseinrichtung, insbesondere in Form einer Konturbeleuchtung für ein Kraftfahrzeug, anzugeben, die es ermöglicht, einen sehr schmalen Lichtstreifen auszubilden.

Zur Lösung dieses Problems ist erfindungsgemäß eine Beleuchtungseinrichtung gemäß Anspruch 1 vorgesehen.

Die erfindungsgemäße Beleuchtungseinrichtung weist ein dreiteiliges Gehäuse auf, das, da unter anderem eine Linienbeleuchtung erzeugt werden soll, länglich ist und letztlich eine Form hat, die der abzubildenden Kontur respektive der Kontur, die von der erzeugten Lichtlinie umrahmt werden soll, entspricht. Das Gehäuse weist zum einen einen Aufnahmeraum auf, in dem ein Lichtleiter angeordnet wird, in welchen an einem Ende Licht eingekoppelt wird, das in an sich bekannter Weise seitlich emittiert wird. Dem Lichtleiter parallelgeordnet ist eine Kunststofffolie, die zwischen den Rändern der Gehäuseteile aufgenommen ist und dort bevorzugt randbündig abschließt. Die Kunststofffolie ist für das vom Lichtleiter emittierte Licht transparent. Da die Kunststofffolie parallel zum Lichtleiter verläuft, wird folglich vom Lichtleiter emittiertes Licht in die eine schmale Stirnseite des Kunststofffolienstreifens eingekoppelt. Das Licht tritt an der anderen schmalen Stirnseite des Folienstreifens wieder aus. Diese Stirnseite ist wie beschrieben randbündig zwischen den sehr schmalen Gehäuserändern aufgenommen. Diese schmale Stirnseite bildet folglich die einzige Lichtaustrittsfläche, die den Lichtstreifen definiert. Die Dicke der Kunststofffolie kann deutlich geringer gewählt werden als der Lichtleiterdurchmesser, so dass sich folglich ein wesentlich schmalerer Lichtstreifen erzeugen lässt. Mithin kann folglich eine sehr feine Konturbeleuchtung realisiert werden, die einerseits auch kleinere Strukturen optisch ansprechend hervorhebt, andererseits aber auch ohne Weiteres integriert werden kann, auch wenn wenig Bauraum zur Verfügung steht.

Ferner ist ein kombiniertes Ambientelicht vorgesehen, das mittels des dritten Gehäuseteils realisiert ist. In einem zweiten Aufnahmeraum ist ein zweiter Lichtleiter vorgesehen, der der Erzeugung des Ambientelicht dient. Sein Licht wird über einen Spalt, der zwischen dem zweiten und dem dritten Gehäuseteil ausgebildet ist, nach Außen gegeben, tritt also in den Raum aus. Auch das Ambientelicht ist quasi "länglich", der zweite Lichtleiter verläuft parallel zu ersten, auch der Spalt verläuft parallel zur Lichtaustrittslinie. Es ergibt sich eine kompakte Bauform einer kombinierten Beleuchtungseinrichtung, die sowohl ein Konturlicht als auch ein Ambientelicht erzeugt.

Die Dicke des Folienstreifens sollte bevorzugt kleiner 1 mm, insbesondere zwischen 0,3 - 0,5 mm liegen. Es ist durch Verwendung einer entsprechend dünnen Folie folglich möglich, Lichtstreifen zu erzeugen, die eine sehr geringe Breite von deutlich unter 1 mm besitzen, verglichen mit bisher bekannten Konturbeleuchtungen, bei denen die Lichtstreifenbreite 2 mm oder mehr beträgt.

Als Kunststofffolie wird bevorzugt eine PMMA-Folie verwendet, die hinreichend transparent ist.

Um die Möglichkeit zu geben, im Bedarfsfall auch ein farbiges Konturlicht zu emittieren, sieht eine zweckmäßige Weiterbildung der Erfindung vor, einen eingefärbten Kunststofffolienstreifen zu verwenden. Hiermit ist es ohne Weiteres möglich, beispielsweise eine rote, gelbe oder grüne Konturbeleuchtungslinie zu erzeugen, wenngleich weißes Licht als Ausgangslicht in den Lichtleiter eingekoppelt wird.

Für eine sichere Fixierung und Integration des Kunststofffolienstreifens im Gehäuse respektive zwischen den Gehäuseteilen weisen die beiden Gehäuseteile bevorzugt randseitige Auflageflächen auf, zwischen denen der Kunststofffolienstreifen aufgenommen sind. Diese Auflageflächen bieten folglich einen hinreichend großen Bereich für eine sichere und feste Folienfixierung. Sie schließen sich bevorzugt direkt an den Aufnahmeraum an, in dem der Lichtleiter aufgenommen ist, so dass die Möglichkeit besteht, die Kunststofffolie bis unmittelbar an respektive in Anlage an den Lichtleiter zu führen.

Zur Fixierung des Kunststofffolienstreifens zwischen den Rändern, insbesondere zwischen den Auflageflächen ist es denkbar, die Folie einzuklemmen, wenn die Gehäuseteile über geeignete Verbindungsmittel wie Rast- oder Klemmmechanismen etc. hinreichend fest miteinander verklemmt werden können. Denkbar ist es aber auch, die Folie zwischen den Rändern zu verkleben.

Zur einfachen Ausbildung des Aufnahmeraums sieht eine zweckmäßige Weiterbildung der Erfindung vor, dass der jeweilige Aufnahmeraum querschnittlich rund ist, wobei eine halbrunde Eintiefung im einen und eine halbrunde Eintiefung im anderen Gehäuseteil vorgesehen ist, die sich in der Montagestellung zum Aufnahmeraum ergänzen.

Der jeweilige Aufnahmeraum selbst kann zur Bildung einer Spiegelfläche abschnittsweise lackiert oder, insbesondere mit Aluminium, bedampft sein.

Um den Randbereich des Gehäuses, in dem die Lichtaustrittsstirnseite des Streifens mündet, möglichst schmal zu gestalten, so dass das Gehäuse insgesamt in diesem Bereich möglichst kleinformatig ist, sieht eine zweckmäßige Weiterbildung der Erfindung vor, dass ein oder mehrere Gehäuseteile randseitig gekröpft ausgebildet sind. Dies ermöglicht es, die Gehäuseteile, bevorzugt eben beide, im Randbereich äußerst schmal auszuführen, so dass sich dort eine Gesamtgehäusestärke einstellt, die im Bereich weniger Millimeter liegt, so dass das Gehäuse selbst bei Integration an dem konturmäßig hervorzuhebenden Gegenstand nicht auffällt.

Um das Ambientelicht breit in den Raum zu streuen kann in dem Spalt eine Streuscheibe vorgesehen sein, die dort vorzugsweise verklebt ist, aber auch verklemmt sein kann. Diese Streuscheibe kann bei Bedarf auch eingefärbt sein, wenn ein farbiges Ambientelicht erzeugt werden soll und weißes Licht in den zweiten Lichtleiter eingekoppelt wird.

Der zweite Aufnahmeraum liegt bevorzugt, gesehen in Richtung des Randes, weiter innen als der erste Aufnahmeraum.

Eine weitere besonders vorteilhafte Weiterbildung der Erfindung sieht vor, dass die Stirnfläche des Gehäuses beidseits der Stirnseite des Streifens und/oder der Streuscheibe mit einer Beschichtung, insbesondere eine Metallbeschichtung oder einer Lackierung, und/oder einer Strukturierung versehen ist. Wie beschrieben ist die Stirnseite des Gehäuserandes, wo der Kunststofffolienstreifen randbündig endet, in der Montagestellung in der Regel ebenfalls sichtbar. Wird nun diese Stirnfläche entsprechend beschichtet, lackiert und/oder mit einer Strukturierung, beispielsweise einer Narbung oder dergleichen, versehen, so kann diesem Bereich eine besondere Optik verliehen werden, die auch dann sichtbar ist, wenn die Konturbeleuchtung nicht zugeschaltet ist. Beispielsweise kann hiermit eine Metalloptikeinfassung realisiert werden, die als solche sichtbar ist, und in welcher bei Bedarf zusätzlich der Lichtstreifen erzeugt werden kann.

Neben der Beleuchtungseinrichtung selbst betrifft die Erfindung ferner ein Kraftfahrzeug, umfassend wenigstens eine derartige Beleuchtungseinrichtung. Eine solche Beleuchtungseinrichtung kann wie beschrieben beispielsweise zur Konturumrahmung von Lautsprechern, Tastern, Bedienfeldern, Anzeigeflächen, Handgriffen, Armlehnen etc. verwendet werden. Selbstverständlich ist die Querschnittsgeometrie des Gehäuses insofern auf den jeweiligen Einsatzzweck abgestimmt. Das Gehäuse muss natürlich derart ausgeformt sein, dass es mit seinem wesentlichen Gehäusekörper letztlich dort integriert werden kann, wo die Konturbeleuchtung verbaut werden soll, zum anderen sind natürlich entsprechende Halte- oder Befestigungsmittel gehäuseseitig vorzusehen, die einen entsprechenden Verbau ermöglichen.

Weitere Vorteile, Merkmale und Einzelheiten der Erfindung ergeben sich aus dem im Folgenden beschriebenen Ausführungsbeispiel. Dabei zeigen:
- Fig. 1: eine Prinzipdarstellung einer erfindungsgemäßen Beleuchtungseinrichtung in einer Explosionsansicht, und
- Fig. 2: die Beleuchtungseinrichtung aus Fig. 1 im zusammengebauten Zustand.

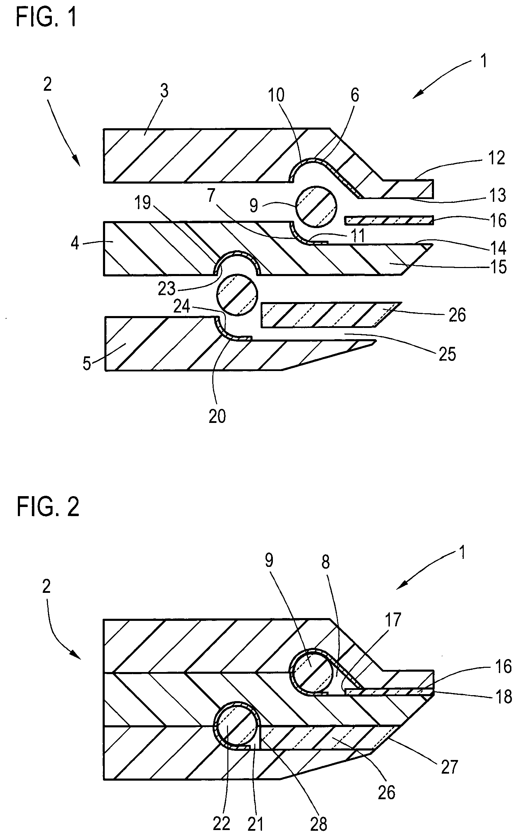

Fig. 1 zeigt in Form einer Prinzipdarstellung eine Explosionsansicht einer erfindungsgemäßen Beleuchtungseinrichtung 1, umfassend ein Gehäuse 2, das aus drei Gehäuseteilen, nämlich einem Gehäuseteil 3, einem zweiten Gehäuseteil 4 und einem dritten Gehäuseteil 5 besteht. Die Gehäuseteile 3, 4, 5 sind vorzugsweise aus Kunststoff gefertigt. Ihre Geometrie ist hier lediglich exemplarisch, sie kann selbstverständlich, insbesondere in Bezug auf den linken Gehäuseteil, beliebig sein. Das Gehäuse selbst ist länglich und letztlich der Kontur angepasst, die hervorzuheben ist. Am Gehäuse, das wie gesagt unterschiedlichste Querschnittsformen haben kann, sind gegebenenfalls Befestigungsmittel, um es entsprechend verbauen zu können.

Am ersten Gehäuseteil 3 und am zweiten Gehäuseteil 4 ist jeweils eine rundliche Eintiefung 6, 7 vorgesehen, die - siehe Fig. 2 - einen Aufnahmeraum 8 für einen ersten Lichtleiter 9 in dem zusammengesetzten Zustand bilden. Die Innenseiten der Eintiefungen 6, 7 können, wie gezeigt, mit einer beispielsweise eine Spiegelfläche bildenden Beschichtung 10, 11, z. B. einer Aluminiumbeschichtung, versehen sein.

Das erste Gehäuseteil 3 ist randseitig gekröpft und läuft in einen sehr dünnen Randabschnitt 12 aus, der eine Auflagefläche 13 aufweist. Dieser zugewandt ist eine Auflagefläche 14 eines Randabschnitts 15 des zweiten Gehäuseteils 4, die in der Montagestellung folglich parallel liegen. Zwischen den Auflageflächen 13, 14 wird ein sehr dünner Streifen 16 einer Kunststofffolie, die Licht, das vom Lichtleiter 9 emittiert wird, leiten kann, mithin transparent ist, aufgenommen. Der Folienstreifen 16 ist beispielsweise dünner als 1 mm, er liegt mit seiner Dicke im Bereich zwischen 0,3 und 0,5 mm und ist bevorzugt aus PMMA.

Der Kunststofffolienstreifen 16 liegt in der Montagestellung benachbart zum Lichtleiter 9 respektive zum Aufnahmeraum 8, so dass Licht vom Lichtleiter 9, das zur Seite emittiert wird, in die Stirnfläche 17 des Streifens 16 eingekoppelt und an der gegenüberliegenden Seite 18 wieder ausgekoppelt werden kann. Da der Folienstreifen 16 sehr dünn ist, kann hierüber folglich ein sehr schmaler Lichtstreifen als Konturbeleuchtung realisiert werden.

An der Unterseite des zweiten Gehäuseteils 4 ist eine weitere rundliche Eintiefung 19 vorgesehen, ihr gegenüber liegt am dritten Gehäuseteil eine rundliche Eintiefung 20. Beide bilden in der Montagestellung wiederum einen Aufnahmeraum 21 für einen weiteren Lichtleiter 22, siehe Fig. 2. Auch die beiden Eintiefungen 19, 20 können jeweils mit einer eine Spiegelfläche bildenden Beschichtung 23, 24 belegt sein.

Zwischen den beiden Gehäuseteilen 4, 5 ergibt sich in der Montagestellung ein Spalt 25, in dem im zusammengesetzten Zustand eine Streuscheibe 26 aufgenommen ist. Diese Streuscheibe 26, die ebenfalls aus einem transparenten Material besteht, ist an ihrer freiliegenden, randbündig abschließenden Stirnfläche 27 angeschrägt, so dass es zu einer vergrößerten Austrittsfläche 27 bzw. schrägen Lichtbrechungsfläche kommt. Über die Streuscheibe 26 kann eine Ambientenbeleuchtung erzeugt werden. Denn auch hier emittiert der Lichtleiter 22 eingekoppeltes Licht zur Seite hin in den Aufnahmeraum 21, wo es in die Stirnfläche 28 der Streuscheibe 26 eingekoppelt wird. An der gegenüberliegenden Stirnfläche 27 wird es wieder ausgekoppelt und in den Raum über die schräge Lichtbrechungsfläche abgestrahlt.

Werden nun sämtliche Bauteile gemäß Fig. 1 zusammengesetzt, so ergibt sich die in Fig. 2 gezeigte Grundkonfiguration. Die Beleuchtungseinrichtung 1 umfasst folglich ein zusammengesetztes, dreiteiliges Gehäuse 2, in dem zwei Aufnahmeräume 8, 21 realisiert sind, die zwei Lichtleiter 9, 22 aufnehmen. Die Querschnittsform der Aufnahmeräume 8, 21 entspricht im Wesentlichen der runden Lichtleiterform. In jeden Lichtleiter kann nun, bevorzugt separat, Licht eingekoppelt werden. Dies geschieht mittels jeweils einer Weißlichtquelle, die Licht an einer Leiterstirnseite einbringt. Das im Lichtleiter 9, 22 laufende Licht wird über seine gesamte Länge auch zur Seite hin ausgekoppelt und entweder in den Folienstreifen 16 oder die Streuscheibe 26 eingekoppelt, wo es an den jeweiligen Austrittsstirnflächen 18 respektive 27 austritt. Über den Kunststofffolienstreifen 16 kann eine Konturbeleuchtung realisiert werden, während über die wesentlich dickere Streuscheibe, die eine Dicke von 2 mm oder mehr besitzt, eine Ambientenbeleuchtung realisiert werden kann. Sowohl der Kunststofffolienstreifen 16 als auch die Streuscheibe 26 können bei Bedarf auch eingefärbt sein, um eine farbige Konturrespektive Ambientenbeleuchtung zu realisieren.

Zentraler Erfindungskern ist hierbei, dass sowohl eine Konturbeleuchtung als auch eine Ambientenbeleuchtung an einer gemeinsamen Beleuchtungseinrichtung realisiert sind.

Der Kunststofffolienstreifen 16 wie auch die Streuscheibe 26 können durch eine reine Klemmhalterung geklemmt zwischen den jeweiligen Gehäuseteilen 3 und 4 respektive 4 und 5 fixiert sein. Denkbar ist es aber auch, sie bei Bedarf dort zu verkleben. Dies ist ohne Weiteres möglich, nachdem jeweils flächige Auflagebereiche an den jeweiligen Gehäuseteilen 3, 4, 5 realisiert sind. Sowohl der Kunststofffolienstreifen 16 als auch die Streuscheibe 26 schließen im Wesentlichen randbündig ab, so dass sich eine im Wesentlichen geschlossene Oberfläche ergibt.

Grundsätzlich ist es möglich, die Flächen der Gehäuseteile 3, 4, 5, die benachbart zu den Austrittsstirnflächen 18 respektive 27 der Streifen 16 bzw. der Streuscheibe 26 liegt, mit einer Beschichtung, beispielsweise einer Metallbeschichtung, oder einer Strukturierung wie einer Narbenstruktur oder dergleichen zu versehen, um der eigentlichen Sichtseite des Gehäuses im verbauten Zustand eine besondere Optik zu verleihen. Dies ist jedoch nicht zwingend erforderlich.

## Patentansprüche

1. Beleuchtungseinrichtung, insbesondere kombinierte Kontur- und Ambientebeleuchtung für ein Kraftfahrzeug, wobei ein Gehäuse (2) umfassend ein erstes und ein zweites Gehäuseteil (3, 4), die zwischen sich in einem ersten Aufnahmeraum (8) einen Lichtleiter (9) aufnehmen, und zwischen deren Rändern in einem Randbereich des Gehäuses ein Streifen (16) aus einer für von dem Lichtleiter (9) emittiertes Licht transparenten Kunststofffolie randbündig angeordnet ist,
**dadurch gekennzeichnet,**
**dass** das emittierte Licht an einer Stirnseite (17) des Streifens (16) eingekoppelt und an der anderen Stirnseite (18) im Randbereich ausgekoppelt wird, und dass ein drittes Gehäuseteil (5) vorgesehen ist, das unter Ausbildung eines zu dessen Rand im Randbereich hin offenen Spalts (25) am zweiten Gehäuseteil (4) angeordnet ist, wobei zwischen dem zweiten und dem dritten Gehäuseteil (4, 5) in einem zweiten Aufnahmeraum (21) ein zweiter Lichtleiter (22) aufgenommen ist, dessen emittiertes Licht durch den Spalt (25) tritt.

2. Beleuchtungseinrichtung nach Anspruch 1,
**dadurch gekennzeichnet,**
**dass** der Folienstreifen (16) eine Dicke kleiner 1 mm, insbesondere zwischen 0,3 - 0,5 mm aufweist.

3. Beleuchtungseinrichtung nach Anspruch 1 oder 2,
**dadurch gekennzeichnet,**
**dass** der Folienstreifen (16) aus PMMA ist.

4. Beleuchtungseinrichtung nach einem der vorangehenden Ansprüche,
**dadurch gekennzeichnet,**
**dass** der Folienstreifen (16) eingefärbt ist.

5. Beleuchtungseinrichtung nach einem der vorangehenden Ansprüche,
**dadurch gekennzeichnet,**
**dass** das erste und zweite Gehäuseteil (3, 4) randseitig Auflageflächen (13, 14) aufweisen, zwischen denen der Folienstreifen (16) aufgenommen ist.

6. Beleuchtungseinrichtung nach Anspruch 5,
**dadurch gekennzeichnet,**
**dass** sich an die Auflageflächen (13, 14) der erste Aufnahmeraum (8) anschließt, in dem der Lichtleiter (9) aufgenommen ist.

7. Beleuchtungseinrichtung nach einem der vorangehenden Ansprüche,
**dadurch gekennzeichnet,**
**dass** der Folienstreifen (16) zwischen den Rändern, insbesondere zwischen den Auflageflächen (13, 14) eingeklemmt oder verklebt ist.

8. Beleuchtungseinrichtung nach einem der vorangehenden Ansprüche,
**dadurch gekennzeichnet,**
**dass** der erste Aufnahmeraum (8) und/ oder der zweite Aufnahmeraum (21) zumindest abschnittsweise lackiert oder mit zur Bildung einer Spiegelfläche, insbesondere mit Aluminium, bedampft ist.

9. Beleuchtungseinrichtung nach einem der vorangehenden Ansprüche,
**dadurch gekennzeichnet,**
**dass** wenigstens ein Gehäuseteil (3, 4, 5) randseitig gekröpft ausgebildet ist.

10. Beleuchtungseinrichtung nach einem der vorangehenden Ansprüche,
**dadurch gekennzeichnet,**
**dass** in dem Spalt (25) eine Streuscheibe (26) angeordnet ist.

11. Beleuchtungseinrichtung nach Anspruch 10,
**dadurch gekennzeichnet,**
**dass** die Streuscheibe zwischen dem zweiten und dritten Gehäuseteil (4, 5) verklemmt oder verklebt ist.

12. Beleuchtungseinrichtung nach Anspruch 10 oder 11,
**dadurch gekennzeichnet,**
**dass** die Streuscheibe (26) eingefärbt ist.

13. Beleuchtungseinrichtung nach einem der vorangehenden Ansprüche,
**dadurch gekennzeichnet,**
**dass** der zweite Aufnahmeraum (21), gesehen in Richtung des Rands, weiter innen liegt als der erste Aufnahmeraum (8).

14. Beleuchtungseinrichtung nach einem der vorangehenden Ansprüche,
**dadurch gekennzeichnet,**
**dass** die Stirnfläche des Gehäuses (2) beidseits der Stirnseite des Folienstreifens (16) und/oder der Streuscheibe (26) mit einer Beschichtung, insbesondere einer Metallbeschichtung oder Lackierung, und/oder einer Strukturierung versehen ist.

15. Kraftfahrzeug, umfassend wenigstens eine Beleuchtungseinrichtung (1) nach einem der vorangehenden Ansprüche.

## Claims

1. Lighting device, in particular combined contour and ambient illumination for a motor vehicle, wherein a housing (2) comprising a first and a second housing part (3, 4) which accommodate between them in a first mounting frame (8) a light guide (9), and between the edges of which in an edge portion of the housing is disposed flush with the edge a strip (16) made of a plastic film which is transparent for light emitted from the light guide (9),
**characterised in**
**that** the emitted light is coupled in at a face side (17) of the strip (16) and is coupled out at the other face side (18) in the edge portion, and that a third housing part (5) is provided which, while forming a gap (25) to the edge of said housing part in the edge portion, is disposed at the second housing part (4), wherein between the second and the third housing part (4, 5) in a second mounting frame (21) is accommodated a second light guide (22), the emitted light of which passes through the gap (25).

2. Lighting device according to claim 1,
**characterised in**
**that** the film strip (16) has a thickness of less than 1 mm, in particular between 0.3 and 0.5 mm.

3. Lighting device according to claim 1 or 2,
**characterised in**
**that** the film strip (16) is made of PMMA.

4. Lighting device according to any of the preceding claims,
**characterised in**
**that** the film strip (16) is coloured.

5. Lighting device according to any of the preceding claims
**characterised in**
**that** the first and second housing part (3, 4) have edge-side abutment surfaces (13, 14), between which the film strip (16) is accommodated.

6. Lighting device according to claim 5,
**characterised in**
**that** the first mounting frame (8), in which the light guide (9) is accommodated, adjoins at the abutment surfaces (13, 14).

7. Lighting device according to any of the preceding claims,
**characterised in**
**that** the film strip (16) is clamped or glued between the edges, in particular between the abutment surfaces (13, 14).

8. Lighting device according to any of the preceding claims,
**characterised in**
**that** the first mounting frame (8) and/or the second mounting frame (21) is at least sectionally painted or metallized with for the formation of a mirrored surface, in particular with aluminium.

9. Lighting device according to any of the preceding claims,
**characterised in**
**that** at least one housing part (3, 4, 5) is formed cropped at the edge-side.

10. Lighting device according to any of the preceding claims,
**characterised in**
**that** in the gap (25) is disposed a diffusing plate (26).

11. Lighting device according to claim 10,
**characterised in**
**that** the diffusing plate is clamped or glued between the second and third housing part (4, 5).

12. Lighting device according to claim 10 or 11,
**characterised in**
**that** the diffusing plate (26) is coloured.

13. Lighting device according to any of the preceding claims,
**characterised in**
**that** the second mounting frame (21), viewed in the direction of the edge, lies further inward than the first mounting frame (8).

14. Lighting device according to any of the preceding claims,
**characterised in**
**that** the face surface of the housing (2) on both sides of the face side of the film strip (16) and/or of the diffusing plate (26) is provided with a coating, in particular a metal coating or paint coating, and/or a structuring.

15. Motor vehicle comprising at least one lighting device (1) according to any of the preceding claims.

## Revendications

1. Dispositif d'éclairage, en particulier éclairage combiné de contour et d'ambiance pour un véhicule automobile, dans lequel un boîtier (2) comprenant une première et une seconde partie de boîtier (3, 4), qui reçoivent entre elles dans un premier espace récepteur (8) un guide-lumière (9) et, entre leurs bords, dans une zone de bord du boîtier, est agencée une bande (16) d'un film de matière plastique transparent à la lumière émise par le guide-lumière (9) au ras du bord,
**caractérisé en ce que**
la lumière émise est couplée sur une face avant (17) de la bande (16) et désaccouplée sur l'autre face avant (18) dans la zone du bord et il est prévu une troisième partie de boîtier (5) qui est agencée sur la deuxième partie de boîtier (4) en formant un écartement (25) ouvert vers leur bord dans la zone de bord, dans lequel est reçu entre la deuxième et la troisième partie de boîtier (4, 5), dans un second espace récepteur (21), un deuxième guide-lumière (22) dont la lumière émise passe à travers l'écartement (25).

2. Dispositif d'éclairage selon la revendication 1,
**caractérisé en ce que**
la bande de film (16) présente une épaisseur qui est inférieure à 1 mm, en particulier entre 0,3 et 0,5 mm.

3. Dispositif d'éclairage selon la revendication 1 ou 2,
**caractérisé en ce que**
la bande de film (16) est constituée de PMMA.

4. Dispositif d'éclairage selon l'une quelconque des revendications précédentes,
**caractérisé en ce que**
la bande de film (16) est colorée.

5. Dispositif d'éclairage selon l'une quelconque des revendications précédentes,
**caractérisé en ce que**
la première et la deuxième partie de boîtier (3, 4) présentent côté bord des surfaces d'appui (13, 14) entre lesquelles la bande de film (16) est reçue.

6. Dispositif d'éclairage selon la revendication 5,
**caractérisé en ce que**
le premier espace récepteur (8) dans lequel le guide-lumière (9) est reçu se raccorde aux surfaces d'appui (13, 14).

7. Dispositif d'éclairage selon l'une quelconque des revendications précédentes,
**caractérisé en ce que**
la bande de film (16) est calée ou collée entre les bords, en particulier entre les surfaces d'appui (13, 14).

8. Dispositif d'éclairage selon l'une quelconque des revendications précédentes,
**caractérisé en ce que**
le premier espace récepteur (8) et/ou le second espace récepteur (21) est ou sont vernis au moins par sections ou est vaporisé avec pour former une surface miroir, en particulier avec de l'aluminium.

9. Dispositif d'éclairage selon l'une quelconque des revendications précédentes,
**caractérisé en ce que**
au moins une partie de boîtier (3,4,5) est formée contre-coudée côté bord.

10. Dispositif d'éclairage selon l'une quelconque des revendications précédentes,
**caractérisé en ce que**
un disque de diffusion (26) est agencé dans l'écartement (25).

11. Dispositif d'éclairage selon la revendication 10,
**caractérisé en ce que**
le disque de diffusion est calé ou collé entre la deuxième et la troisième partie de boîtier (4, 5).

12. Dispositif d'éclairage selon la revendication 10 ou 11,
**caractérisé en ce que**
le disque de diffusion (26) est coloré.

13. Dispositif d'éclairage selon l'une quelconque des revendications précédentes,
**caractérisé en ce que**
le deuxième espace récepteur (21) observé dans la direction du bord se situe plus vers l'intérieur que le premier espace récepteur (8).

14. Dispositif d'éclairage selon l'une quelconque des revendications précédentes,
**caractérisé en ce que**
la surface frontale du boîtier (2) est pourvue des deux côtés de la face frontale de la bande de film (16) et/ou du disque de diffusion (26) d'un revêtement, en particulier d'un revêtement métallique ou d'un laquage, et/ou d'une structuration.

15. Véhicule automobile comprenant au moins un dispositif d'éclairage (1) selon l'une quelconque des revendications précédentes.
